Europäisches Patentamt

European Patent Office

Office européen des brevets

(19)

(11) Numéro de publication : **0 454 558 A1**

(12) # DEMANDE DE BREVET EUROPEEN

(21) Numéro de dépôt : **91401060.8**

(22) Date de dépôt : **22.04.91**

(51) Int. Cl.⁵ : **H04Q 11/04, H04L 29/06, H04M 11/06**

(30) Priorité : 23.04.90 FR 9005142

(43) Date de publication de la demande :
**30.10.91 Bulletin 91/44**

(84) Etats contractants désignés :
**CH DE FR GB IT LI**

(71) Demandeur : **BULL S.A.**
**121, Avenue de Malakoff**
**F-75116 Paris (FR)**

(72) Inventeur : **Tran, Hong-Lam**
**44, avenue Raymond Falaize**
**F-78390 Bois D'Arcy (FR)**
Inventeur : **Abdelmouttalib, Najib**
**26, rue Louise Weiss**
**F-78700 Conflans Sainte Honorine (FR)**
Inventeur : **Duflot, Didier**
**128, avenue de la Résistance**
**F-92350 Le Plessis Robinson (FR)**

(74) Mandataire : **Gouesmel, Daniel et al**
**BULL S.A. Industrial Property Department**
**P.C.: HQ 8M006 B.P. 193.16 121 avenue de**
**Malakoff**
**F-75764 Paris Cédex 16 (FR)**

(54) **Convertisseur multiprotocoles de raccordement d'une pluralité de terminaux asynchrones à un réseau de télécommunications.**

(57) Convertisseur (CMP) multiprotocoles de raccordement d'une pluralité de terminaux asynchrones ($T_1$ à $T_n$) à un réseau de télécommunications (RE) par l'intermédiaire d'une liaison numérique multiplexée temporellement (AP) comprenant une pluralité de canaux de données ($C_0$ à $C_{31}$, $VT_0$ à $VT_{31}$) gérés selon une pluralité de protocoles et supportés par une ligne de transmission (PE, PR), comprenant :
- une unité de commande et de gestion (UCG),
- au moins une unité de conversion ($CONV_1$) reliée d'une part à l'unité de commande (UCG) et d'autre part à la ligne de transmission,

L'unité de commande (UCG) définit le canal de données de la liaison ($C_i$, $VT_i$) affecté aux trames de données émises par ou destinées à un terminal donné et le protocole correspondant et l'unité de conversion ($CONV_1$) effectue la conversion des protocoles et des débits de données allant vers ou provenant de chaque terminal donné en protocole et débits de données du canal de données affecté à ce terminal.
Applicable aux réseaux de télécommunications.

EP 0 454 558 A1

FIG.5

La présente invention concerne un convertisseur multiprotocoles de raccordement d'une pluralité de terminaux asynchrones à un réseau de télécommunications. Elle est plus particulièrement applicable au raccordement de terminaux utilisant des liaisons de type asynchrone V24 à un réseau de transmission de données où ces dernières sont acheminées par l'intermédiaire d'une liaison de communication de type $S_2$ définie par la norme européenne ECMA 104.

On sait qu'un réseau de transmission de données, appelé encore réseau de télécommunications, permet de relier une pluralité de terminaux ou stations communiquant entre eux par l'intermédiaire d'une ligne de transmission. Celle-ci est constituée par exemple par deux paires de fils téléphoniques (l'une pour l'émission, l'autre pour la réception), ce qui est le cas pour la liaison de type $S_2$. Les terminaux sont également appelés "équipement terminal de traitement de données" en abrégé, ETTD, (Data Terminal Equipment, en langue anglaise, en abrégé, DTE).

Les différents terminaux d'un réseau émettent des messages d'informations et reçoivent ceux émis par les autres. Un message est constitué par un ensemble de blocs élémentaires d'informations comprenant un nombre déterminé d'informations binaires. Ces blocs élémentaires sont appelés trame. Celle-ci est structurée, comporte un message de début et de fin, l'adresse du terminal auquel est destiné le message, l'adresse du terminal émetteur, la longueur des données, les données utiles, etc ... .

Les règles d'accès aux différents terminaux qui régissent le dialogue entre ceux-ci définissent ce qui est communément appelé un protocole. Ce dernier constitue un système qui ordonnance la conversation entre les terminaux sans la hiérarchiser.

On connaît différents types de protocoles (pour désigner un protocole, on utilise également le mot procédure). L'un des plus utilisé est le protocole HDLC (High Level Data Link Control), qui est normalisé selon l'avis X25 du CCITT (Comité Consultatif International Télégraphique Téléphonique), livre jaune, fascicule XIII.2, Novembre 80, et selon les normes internationales définies par l'Organisation Internationale de la Normalisation dite ISO, sous les désignations suivantes (IS3309-2, IS 4335, IS 6159 et 6256).

Il existe également un protocole défini par la norme européenne ECMA 102 (ou encore par le CCITT, sous la désignation V110), qui tend à être utilisé de plus en plus fréquemment.

Dans la pratique courante, un terminal est relié à la ligne de transmission par l'intermédiaire d'un équipement de terminaison de circuits de données ETCD (Data Circuit Terminating Equipment, en abrégé, DCE, en anglais), qui est un organe chargé en particulier d'adapter le signal électrique délivré par le terminal à la ligne de transmission.

L'une des tendances actuelles du développement technologique dans le domaine des réseaux de transmission de données est le regroupement du trafic téléphonique et des transmissions de données et plus généralement de l'ensemble du trafic numérique sur une infrastructure commune. Ceci est dû essentiellement à l'introduction progressive des techniques numériques dans le domaine de la téléphonie. Ceci est l'objectif du réseau numérique à intégration de données (RNIS, sigle français) dont l'équivalent anglais est Integrated Services Digital Network (ISDN, sigle anglais).

Le réseau numérique à intégration de services permet d'offrir, en dehors de la téléphonie numérique, une grande variété d'applications téléinformatiques, la transmission d'images fixes en particulier dans le domaine de la télécopie rapide, et dans un proche avenir la possibilité de transmettre des images animées (télévision, vidéophone, ...).

Le RNIS est utilisé désormais principalement en Europe et en particulier en France. De ce fait, il comporte un certain nombre d'interfaces normalisées selon des normes ECMA. Par exemple, pour les communications téléinformatiques entre ordinateurs ou terminaux et PABX (autocommutateurs téléphoniques numériques de type privé) l'interface la plus intéressante est l'interface dite $S_2$ définie par la norme européenne ECMA 104. Une telle interface est encore appelée liaison de communication du type $S_2$. Elle utilise comme support physique une ligne de transmission téléphonique.

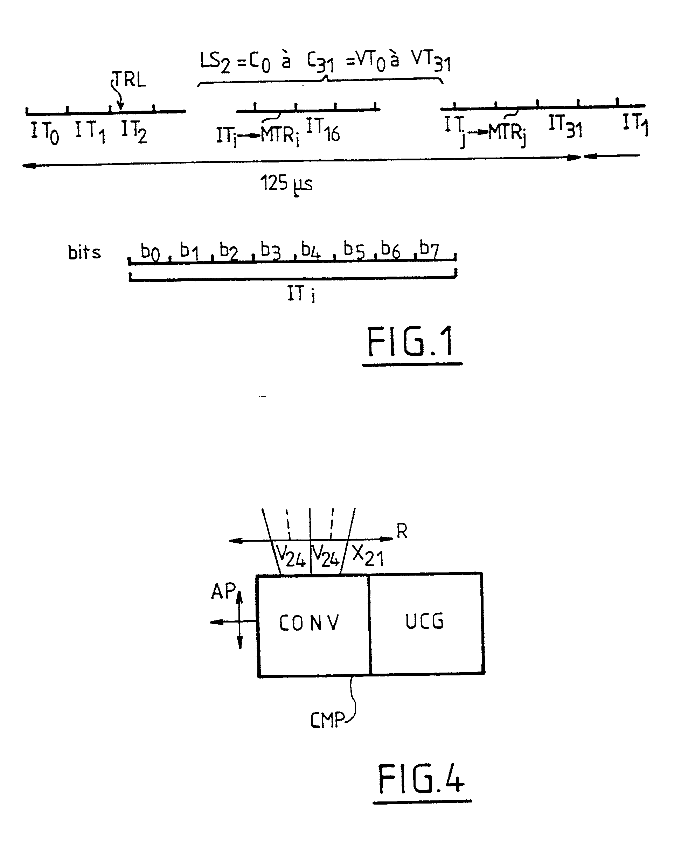

La figure 1 rappelle comment est réalisée une telle liaison de communication.

Une liaison $LS_2$ de ce type possède un débit de 2,048 mégabits par seconde (ou encore Mbps) et comporte 32 canaux distincts, à savoir 30 canaux de type B pour la transmission des données avec un débit de 64 kbits par seconde (ou encore Kbps), un canal de type D de signalisation à 64 Kbits par seconde et un canal de verrouillage de trame dont le débit est également de 64 Kbits par seconde. Le principe de la liaison $LS_2$ est le multiplexage temporel, chaque voie temporelle $VT_0$ à $VT_{31}$ constituant un canal distinct. A chaque voie temporelle correspond un intervalle de temps $IT_0$, $IT_1$, ..., $IT_{31}$, chacun de ces intervalles permettant d'acheminer 8 bits $b_0$ à $b_7$. En une seconde, on peut donc véhiculer 8 000 trames élémentaires temporelles TRL comprenant 32 octets émis chacun pendant les intervalles de temps $IT_0$, $IT_1$, ..., $IT_{31}$. La durée d'une trame élémentaire temporelle TRL est de 125 microsecondes et la durée d'un intervalle de temps $IT_i$ est de l'ordre de 3,9 microsecondes. L'intervalle de temps $IT_0$ permet de repérer le début de chaque trame élémentaire TRL, alors que pendant l'intervalle de temps $IT_{16}$, on transporte des informations de signalisation permettant de connaître l'identité et la nature de chaque correspondant qui émet par l'intermédiaire d'un terminal et d'en déduire le type de protocole sur chacune des voies temporelles ou canal et la charge globale nécessaire au traitement de la liaison $LS_2$.

Sur les autres canaux correspondant aux intervalles de temps autres que $IT_0$ et $IT_{16}$, sont transportés les messages d'informations. Les messages d'informations sont formés d'une succession de trames d'informations que l'on peut désigner par exemple par MTR. Une telle trame est émise selon un type de protocole déterminé, par exemple HDLC, sur l'une des voies temporelles précitées, par exemple la voie temporelle $VT_i$. La trame correspondante $MTR_i$ est donc émise sous forme d'une succession d'octets, sur la voie temporelle $VT_i$, à l'intérieur de chaque intervalle de temps $IT_i$, et ce, toutes les 125 microsecondes. Il en serait de même pour une autre trame $MTR_j$ émise par exemple par un autre terminal que celui qui avait émis la trame $MTR_i$, sur la voie temporelle $VT_j$ sous forme d'une succession d'octets émis pendant un intervalle de temps $IT_j$ selon un protocole déterminé, par exemple différent d'HDLC, ce protocole pouvant être le protocole ECMA 102. L'une des particularités de la liaison d'informations $LS_2$ définie par la norme ECMA 104 est que, sur une même voie temporelle, on peut faire circuler successivement des trames d'informations selon des protocoles différents. Une telle liaison offre donc une souplesse d'utilisation considérable. Par ailleurs, on peut conclure de ce qui précède qu'il ne s'agit pas de confondre une trame d'informations, telle que $MTR_i$ ou $MTR_j$ émise par un terminal donné, qui a une longueur variable suivant la nature du message émis, d'une part, et d'autre part une trame élémentaire temporelle de type TRL qui a toujours la même durée, à savoir 125 microsecondes et comporte 32 octets, chacun de ceux-ci appartenant à une trame d'informations $MTR_i$, $MTR_j$ différente.

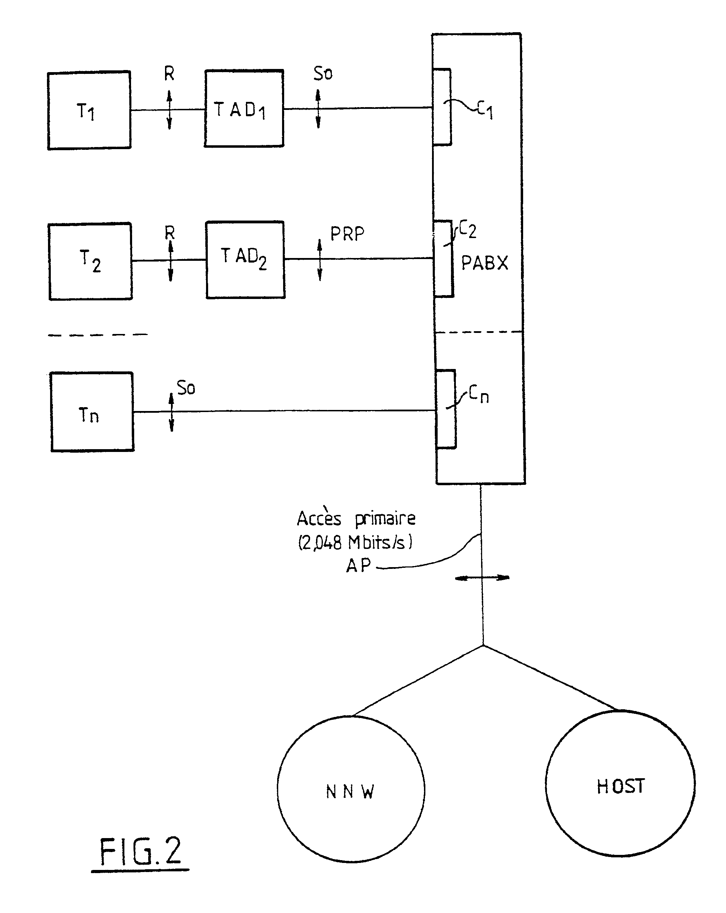

On considère désormais la figure 2 qui montre comment on peut relier selon l'art antérieur une pluralité de terminaux de type différents utilisant par exemple des liaisons de type V24 ou encore de type $S_0$ à une liaison de type $S_2$ par l'intermédiaire d'un autocommutateur téléphonique de type privé PABX. On peut dire que la figure 2 représente un réseau de type RNIS. Ce réseau comprend plusieurs terminaux dits classiques, tels que les deux terminaux $T_1$ et $T_2$ et un terminal $T_n$ de type RNIS. Le terminal $T_1$ est relié par une liaison R de type V24 à l'autocommutateur PABX par l'intermédiaire d'un terminal adaptateur $TAD_1$ et d'un coupleur $C_1$. Le terminal adaptateur $TAD_1$ est relié au coupleur $C_1$ par l'intermédiaire d'une liaison de type $S_0$ définie par la recommandation I430 du CCITT.

Le terminal $T_2$ est relié à l'autocommutateur PABX par l'intermédiaire de la liaison R de type V24, du terminal adaptateur $TAD_2$ et d'une liaison de type particulier, dénommée PRP, par exemple, propre à un constructeur déterminé, et enfin par un coupleur $C_2$.

Le terminal $T_n$ de type RNIS est relié par la liaison de type $S_0$ et le coupleur $C_n$ à l'autocommutateur PABX.

Les deux liaisons R de type V24 permettant de relier les terminaux $T_1$ et $T_2$ aux deux adaptateurs $TAD_1$ et $TAD_2$ peuvent être des liaisons émettant avec des débits différents qui peuvent être par exemple 1200, 2400, 4800, 9600 ou encore 19200 bits par seconde. La liaison de type $S_0$ a un débit de 64 kbits par seconde.

Pour relier des liaisons aussi différentes que $S_0$ et PR à l'autocommutateur PABX, il est nécessaire d'utiliser des coupleurs spécifiques à chacune des liaisons, à savoir $C_1$, $C_2$ et $C_n$, $C_n$ et $C_1$ pouvant être du même type. En fait, chaque constructeur, qui utilise une liaison telle que PR, fabrique un coupleur tel que $C_2$, coupleur qui est différent d'un constructeur à l'autre.

Par ailleurs, l'autocommutateur PABX est relié par exemple par une liaison de type $S_2$ à un réseau numérique de type RNIS, dénommé NNW. Ce réseau peut être par exemple le réseau connu en France sous l'appellation de NUMERIS. L'autocommutateur peut être également relié par une liaison de type $S_2$ à un ordinateur HOST. Plus généralement, l'autocommutateur PABX est relié à un réseau numérique de type RNIS ou à un ensemble d'ordinateurs par une liaison appelée accès primaire AP, qui peut être de type $S_2$ ou plus généralement une liaison multiplexée temporellement avec un débit de 2048 mégabits par seconde, dont les principes de fonctionnement sont voisins de ceux de la liaison $S_2$. De telles liaisons existent par exemple en France sous l'appellation $VN_2$.

En l'état actuel de la technique, pour relier un ensemble de terminaux utilisant des liaisons de types différents avec des débits différents, à un réseau de type RNIS, ou encore un réseau utilisant un accès primaire AP à 2,048 mégabits par seconde, il est nécessaire d'utiliser autant de terminaux adaptateurs qu'il y a de terminaux de types différents ou de débits différents, un grand nombre de coupleurs tels $C_1$ à $C_n$, et un autocommutateur PABX. Cela est donc peu pratique et coûteux.

La présente invention permet de remédier à ces inconvénients en constituant un convertisseur multiprotocoles permettant de raccorder une pluralité de terminaux de types différents émettant avec des débits différents à une liaison de type accès primaire sans nécessairement passer par l'intermédiaire d'un autocommutateur privé, et en supprimant l'existence de terminaux adaptateurs et de coupleurs spécialisés.

Le convertisseur est extrêmement rapide car il utilise un processeur de signal et un dispositif d'allocation dynamique permettant d'affecter à un moment déterminé un canal de données utilisant un protocole donné à une voie de transmission physique déterminée, le convertisseur comportant n voies physiques différentes. Le dispositif d'allocation dynamique permet, sur une même voie physique de changer de protocole (ce changement étant transparent pour les autres voies), ou changer de voie physique pour le même protocole, le tout sans remettre à zéro les autres voies.

Selon l'invention, le convertisseur multiprotocoles de raccordement d'une pluralité de terminaux asynchrones à un réseau de télécommunications par l'intermédiaire d'une liaison numérique multiplexée temporellement comprenant une pluralité de canaux de données gérés selon une pluralité de protocoles et supportés par une ligne de transmission, comprenant :

    – une unité de commande et de gestion gérant les phases d'appel entre chaque terminal et le réseau,

    – au moins une unité de conversion reliée d'une part à l'unité de commandes et d'autre part à la ligne de transmission, assurant le multiplexage et le démultiplexage temporels des différents canaux de données de la liaison, est caractérisé en ce que, l'unité de conversion comprenant des coupleurs asynchrones la reliant aux terminaux et envoyant au moyen d'une liaison série des trames de données vers ceux-ci ou recevant les trames qu'ils émettent et les transmettant à l'unité de conversion, l'unité de commande définit le canal de données de la liaison affecté aux trames de données émises par ou destinées à un terminal donné et le protocole correspondant, et l'unité de conversion effectue la conversion des protocoles et des débits de données allant vers ou provenant de chaque terminal donné, en protocoles et débits de données du canal de données affecté à ce terminal.

D'autres caractéristiques et avantages de la présente invention apparaîtront dans la description suivante donnée à titre d'exemple non limitatif et en se référant aux dessins annexés. Sur ces dessins :

    – **La figure 1** rappelle comment est réalisée une liaison de communication de type $S_2$,

    – **La figure 2** montre un réseau permettant de relier une pluralité de terminaux à une liaison de type $S_2$ par l'intermédiaire d'un autocommutateur téléphonique, selon l'art antérieur,

    – **La figure 3** montre comment le convertisseur selon l'invention permet de relier une pluralité de terminaux de types différents ayant des débits de données différents à une liaison de type accès primaire,

    – **La figure 4** est un schéma extrêmement simplifié montrant les deux grandes parties constitutives du convertisseur selon l'invention,

    – **La figure 5** montre les éléments caractéristiques essentiels du convertisseur multiprotocoles selon l'invention,

    – **La figure 6** est une vue plus détaillée de l'unité de conversion appartenant au convertisseur multiprotocoles selon l'invention,

    – **La figure 7** est une vue plus détaillée de la figure 6,

    – **Les figures 8 et 9** montrent comment est constituée la mémoire double accès de l'unité de conversion appartenant au convertisseur selon l'invention.

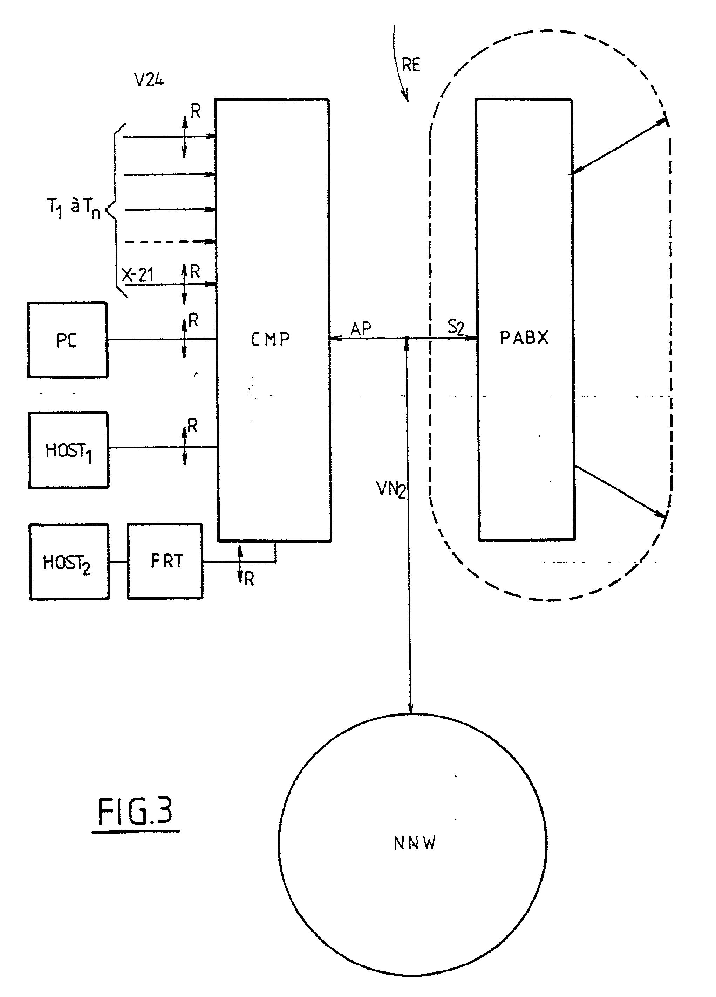

On considère la figure 3.

Le convertisseur multiprotocoles selon l'invention CMP est raccordé à une pluralité de terminaux asynchrones $T_1$ à $T_n$, à des microordinateurs tels que l'ordinateur PC, à un premier ordinateur $HOST_1$, à un autre ordinateur $HOST_2$. Tous les terminaux $T_1$ à $T_n$, PC, $HOST_1$, $HOST_2$ peuvent émettre avec des débits de données différents. Les terminaux $T_1$ à $T_n$ émettent les données (ou reçoivent) au moyen de liaisons asynchrones de type V24 ou X21, $HOST_1$ et PC émettent au moyen d'une liaison V24, ainsi que $HOST_2$ par l'intermédiaire du frontal FRT.

Par ailleurs, le convertisseur selon l'invention CMP est directement connecté au réseau RE par l'intermédiaire d'une liaison dite accès primaire AP. Cet accès primaire peut être soit une liaison de type $S_2$ permettant de relier le convertisseur CMP à un autocommutateur PABX, soit une liaison telle que $VN_2$ permettant de le relier à un réseau de type RNIS à savoir NNW.

Par commodité de langage, on désignera sous le nom de R, les liaisons (de type V24 et parfois X21 par exemple) qui relient les différents terminaux $T_1$ à $T_n$, PC, $HOST_1$, $HOST_2$ au convertisseur CMP.

Le but du convertisseur CMP est d'adapter à la fois les protocoles et les débits de données différents utilisés sur l'ensemble des liaisons R, au débit et aux protocoles utilisés sur l'accès primaire AP. On peut dire que de ce fait ce convertisseur est pratiquement universel.

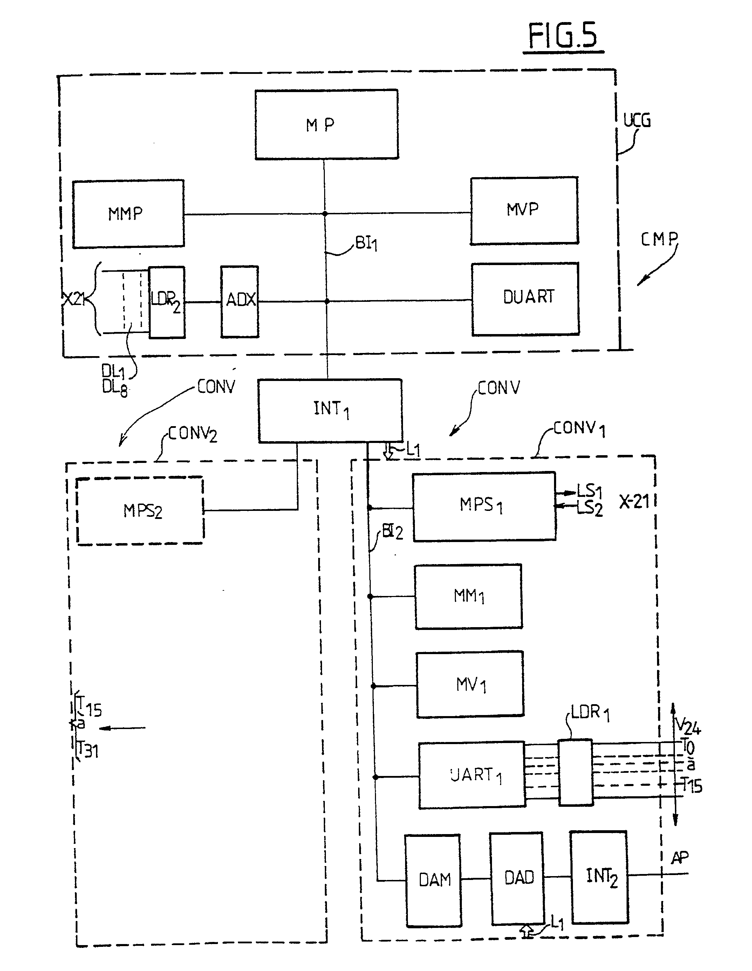

On considère désormais la figure 4.

Le convertisseur CMP comprend deux grandes unités fonctionnelles essentielles à savoir, l'unité de contrôle et de gestion UCG, et l'unité de conversion CONV.

L'unité de conversion CONV est reliée d'une part aux liaisons de type R et d'autre part à l'accès primaire AP.

L'unité de contrôle et de gestion gère les phases d'appel (niveau 2 et niveau 3 du modèle ISO), c'est-à-dire le traitement de la signalisation. En d'autres termes, l'unité de contrôle et de gestion UCG négocie les appels entre les différents terminaux qui sont directement reliés par les liaisons R au convertisseur CMP et les terminaux du réseau RE qui sont reliés au convertisseur par l'intermédiaire de l'accès primaire AP. Cette phase d'appel se fait selon par exemple les normes ECMA 105 et 106. Elle s'effectue sur le canal D (voie temporelle $VT_{16}$, intervalles de temps $IT_{16}$).

L'unité UCG effectue également l'administration du convertisseur : c'est elle qui définit pour un terminal utilisant une liaison R donnée, le canal de données correspondant qui sera utilisé sur l'accès primaire ainsi que le protocole utilisé sur ce canal. Cette affectation est transmise à l'unité de conversion qui traite le protocole correspondant.

L'unité de conversion prend donc en charge l'ensemble des voies asynchrones de type R qui lui sont connectées, effectue la conversion des données écrites en V24 en données écrites en ECMA 102 et réciproquement. On peut dire également que l'unité de conversion adapte les débits de données et les protocoles utilisés sur les liaisons de type R au débit de données et aux protocoles utilisés sur la liaison accès primaire AP.

L'unité de conversion assure par ailleurs les fonctions classiques de multiplexage et démultiplexage temporels des différents canaux de données de la liaison accès primaire AP.

La figure 5 montre les éléments constitutifs essentiels de chacune des unités UCG et CONV.

L'unité UCG comprend :

– le microprocesseur MP, par exemple de type 68020 de la Société MOTOROLA SEMICONDUCTEURS, qui est le processeur maître du convertisseur CMP,

– la mémoire morte MMP dont la capacité dans l'exemple de réalisation décrit ici est de 256 Koctets,

– la mémoire vive MVP dont la capacité est de 1 Moctet,

– un élément DUART (Dual Asynchronus Receiver Transmitter) par exemple de type 68681 de la Société MOTOROLA SEMICONDUCTEURS.

Ces différents éléments, à savoir MP, MMP, MVP, DUART sont reliés par l'intermédiaire d'un même bus interne $BI_1$, parallèles sur 32 bits dans l'exemple de réalisation décrit ici. (En fait, l'unité UCG travaille en mode 32 bits lorsqu'il s'agit de données, et en mode 16 bits lorsqu'il s'agit d'instructions de programme).

Par ailleurs, dans un exemple de réalisation préféré de l'invention, l'unité UCG comprend en outre une interface ADX associée à un adaptateur de lignes $LDR_2$ qui permet de connecter une ligne synchrone X21 et donc un terminal X21 à l'unité de contrôle et de gestion UCG. En effet, une liaison X21 comprend 8 lignes en parallèle véhiculant les signaux de commande (utilisés lors des phases d'appel), ces 8 lignes étant désignées par $DL_1$ à $DL_8$. Elles sont connectées à l'adaptateur de lignes $LDR_2$, cet adaptateur de lignes $LDR_2$ étant lui-même connecté à l'interface ADX. Cette dernière est reliée au bus interne $BI_1$. Au niveau des données, une interface X21 comprend deux lignes série à savoir $LS_1$ et $LS_2$ qui, elles, sont reliées à un port série du microprocesseur de signal $MPS_1$ qui constitue l'élément principal de l'unité de conversion $CONV_1$ (voir ci-dessous). L'interface ADX est par exemple de type HM55421 de la Société MATRA HARRIS SEMICONDUCTEURS MHS, alors que les adaptateurs de lignes $LDR_2$ sont constitués par des éléments 3487 et 3486 de la Société NATIONAL SEMICONDUCTORS. Rappelons que les adaptateurs de lignes (line drivers, en anglais) assurent l'adaptation électrique des niveaux de tension utilisés dans les circuits intégrés de type TTL (0 et 5 volts) aux niveaux utilisés sur les liaisons X21.

Les deux unités UCG et CONV communiquent entre elles par l'intermédiaire d'une interface $INT_1$ formée d'un ensemble de boîtiers PAL, plus communément appelée en terminologie anglo-saxonne sous le vocable de glue.

L'unité de conversion CONV se compose en fait de deux unités de conversion strictement identiques et symétriques vues du processeur maître, $CONV_1$ et $CONV_2$. On se limitera donc à décrire l'unité de conversion $CONV_1$.

L'unité de conversion $CONV_1$ comprend :

– un processeur de signal $MPS_1$ associé par l'intermédiaire de son bus interne $BI_2$ à une mémoire vive $MV_1$ et une mémoire morte $MM_1$ commune aux unités $CONV_1$ et $CONV_2$, et à l' interface $INT_1$,

– une mémoire double accès DAM, reliée au bus interne $BI_2$,

– un dispositif d'allocation dynamique des voies temporelles $VT_0$ à $VT_{31}$ sur les voies physiques de la mémoire double accès, à savoir DAD, relié à la mémoire double accès d'une part, et d'autre part au processeur maître MP par la liaison $L_1$, $INT_1$ et $BI_1$.

– une interface $INT_2$ reliée d'une part au dispositif d'allocation dynamique DAD et d'autre part à la liaison accès primaire AP,

– un coupleur asynchrone $UART_1$ relié d'une part à 16 lignes de type V24 par l'intermédiaire d'adaptateurs de lignes $LDR_1$ à 16 terminaux $T_0$ à $T_{15}$, et d'autre part au bus interne $BI_2$ du processeur de signal $MPS_1$. (Le coupleur correspondant de l'unité $CONV_2$ est connecté à 16 autres terminaux V24 $T_{16}$ à $T_{31}$).

On voit que l'unité de conversion $CONV_1$ est bâtie autour du processeur de signal $MPS_1$. Dans l'exemple de réalisation décrit ici, ce dernier est du type TMS 320 C25 de la Société TEXAS INSTRUMENTS. Il est décrit ainsi que ces applications dans le livre de TEXAS INSTRUMENTS intitulé "Digital signal processing applications with the TMS 320 family", ainsi que dans le TMS 320 C25 users guide. Ce processeur est rythmé par une horloge à 40 Mhz, ce qui correspond à un temp d'accès mémoire de 100 ns. La mémoire morte programmable $MM_1$ a une capacité mémoire de 128 Koctets, alors que la mémoire vive $MV_1$, mémoire de travail du processeur de signal a un temps d'accès de 30 ns et une capacité mémoire de 64 Koctets. Le processeur $MPS_1$ est connecté par les deux lignes série $LS_1$ et $LS_2$, pour les données, à la liaison X21 (voir ci-dessus) (1 ligne à l'émission, 1 ligne en réception).

La mémoire double accès DAM a une capacité mémoire de 2 Koctets et est par exemple constituée par deux mémoires de type AM2130-55PC de 55 ns de temps d'accès de la Société AMD, d'un Koctets chacune.

– L'interface $INT_2$ est réalisé par exemple par des composants EF7333, EF 73321 du constructeur THOMSON, et par le 8075 de ROCKWELL aussi bien en réception qu'en émission.

Le processeur de signal $MPS_1$ possède une largeur de bus de données $BI_2$ de 16 bits. L'interface $INT_1$ est donc conçue de façon à adapter le bus de données $BI_2$ d'une largeur de 16 bits au bus interne de données $BI_1$ du processeur MP qui a une largeur de 32 bits.

L'adaptateur de lignes $LDR_1$ assure l'adaptation électrique des niveaux de tension des lignes V24 (+12 et -12 volts) à ceux des niveaux de tension logiques des circuits intégrés de type TTL (0 et 5 volts).

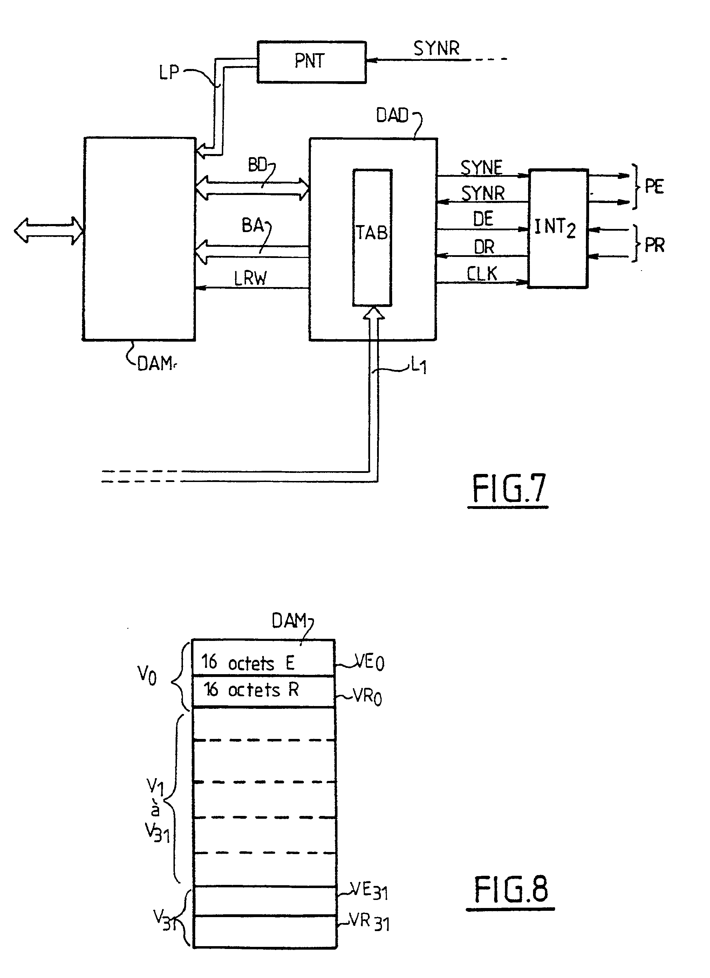

La mémoire double accès DAM est organisée en 64 éléments distincts de type fifo (first-in, first-out) de 16 octets chacun, chaque élément de type fifo étant attribué à une voie physique et à un sens de transmission (émission ou réception). Ceci est particulièrement visible à la figure 8 qui montre de façon plus détaillée comment est constituée cette mémoire double accès. Cette dernière comprend 32 voies physiques distinctes $V_0$ à $V_{31}$, chaque voie comprenant une sous-voie (correspondant à un élément fifo de 16 octets) VE réservée à l'émission et une seconde sous-voie VR réservée à la réception. Ainsi, la voie physique $V_0$ se décompose en deux sous-voies $VE_0$ et $VR_0$, la sous-voie $VE_0$ correspondant à l'émission et $VR_0$ à la réception de données. Il en est bien entendu de même pour chacune des autres voies $V_1$ à $V_{31}$. Ainsi, la voie $V_{31}$ comporte deux sous-voies $VE_{31}$ correspondant à l'émission et $VR_{31}$ correspondant à la réception.

Les coupleurs asynchrones UART sont des coupleurs du type "Universal asynchronous receiver/transmitter" ayant par exemple la référence 2698 B de la Société RTC SIGNETICS.

Le coupleur $UART_1$ est connecté par une liaison série de type asynchrone à chacun des 16 terminaux dont il reçoit les informations sous forme de groupes de 9 à 11 bits, soit 7 à 8 bits (suivant le type de terminal) de données encadrés par un bit de début et 1 ou 2 bits de fin. Il les transmet au processeur maître (via $BI_2$ et la mémoire vive $MV_1$) au moyen d'une liaison parallèle sur 7 ou 8 bits (le coupleur $UART_1$ n'utilise donc alors qu'une partie du bus $BI_2$ qui est un bus sur 16 bits).

L'interface $INT_2$ entre le dispositif d'allocation dynamique DAD et la liaison accès primaire AP, est chargée de la mise en forme des signaux provenant soit du dispositif d'allocation dynamique DAD à l'émission soit de la liaison accès primaire AP en réception. Il réalise donc l'adaptation électrique des signaux entre DAD et AP. Le support de transmission de la liaison AP étant supposé être une ligne téléphonique, l'interface $INT_2$ est donc connectée à la paire de fils PE pour l'émission et la paire de fils PR pour la réception (voir figure 7). Par ailleurs, l'interface $INT_2$ récupère sur chacune des voies temporelles $VT_0$ à $VT_{31}$, un signal d'horloge CLK utilisé tant à l'émission qu'à la réception, transmet en réception les données DR au dispositif d'allocation dynamique DAD et reçoit à l'émission les données DE provenant de celui-ci. Il extrait de chaque trame temporelle élémentaire TRL un signal de synchronisation de réception SYNR (figure 7) constitué d'une suite d'impulsions émises à des instants successifs $t_1$, $t_2$, etc, ..., séparés les uns des autres par un intervalle de temps égal à 125 microsecondes qui est la durée d'une trame temporelle élémentaire TRL. Le signal de synchronisation SYNE à l'émission est synchrone du signal SYNR en réception. Les composants EF 7333 et EF 73321 extraient CLK et SYNR et émettent SYNE alors que le composant 8075 effectue le calcul de $CRC_4$ défini par la norme CCITT G704 permettant de calculer les taux d'erreur sur la ligne $S_2$.

Le signal d'horloge CLK est un signal périodique carré qui a une fréquence d'environ 2,048 Mhz.

La mémoire morte MMP contient le programme de traitement des phases d'appel, correspondant aux couches 2 et 3 du module ISO, selon les normes ECMA 105/106. Ce programme permet d'établir le dialogue entre l'unité UCG, au nom du convertisseur CMP, et l'ensemble des terminaux du réseau RE. Ce dialogue est en fait une négociation entre le convertisseur et l'ensemble des terminaux du réseau RE précité pour déterminer quel terminal particulier relié au convertisseur CMP par une liaison V24 ou X21 va échanger des informations par la liaison AP avec l'un des terminaux du réseau RE désigné par la suite sous le nom de correspondant, et une fois ceci établi, quel canal de données autre que $C_0$ ou $C_{16}$ va être utilisé sur la liaison AP pour échanger les informations entre ces deux terminaux.

La mémoire morte MMP comprend également un programme de commande du dispositif d'allocation dynamique DAD, programme permettant d'affecter telle ou telle voie physique de la mémoire double accès DAM telle ou telle voie temporelle $VT_0$ à $VT_{31}$ de la liaison AP.

Ces programmes contenus dans la mémoire morte MMP sont transférés dans la mémoire vive MVP, lors de la mise sous tension du convertisseur.

L'élément DUART sert à piloter le processeur maître MP par un terminal spécial de maintenance ce qui permet à MP de se rendre compte et de vérifier tout ce qui se passe sur chacune des voies physiques de l'unité de conversion (DAM et DAD) et également sur chacune des lignes V24, en examinant notamment l'état (status, en anglais) de chacune de celles-ci.

La mémoire morte $MM_1$ comprend le programme permettant de convertir à la fois le débit des données et les protocoles des informations provenant de la liaison AP en débit de données et protocoles des informations qui devront être transmises via les coupleurs asynchrones $UART_1$ aux différents terminaux par les lignes V24 ou X21. Ce programme qui est en fait un micrologiciel peut donc traiter plusieurs protocoles, par exemple HDLC, ECMA 102, X21, V24 et en plus un protocole spécial de maintenance d'une liaison de type $S_2$, programme appelé $BS_2$ d'une part. Le programme ECMA 102 par exemple permet de convertir les débits qui sont de 64 Kbits par seconde sur chaque canal de données de la liaison AP en débits variables selon les terminaux, par exemple de 1200 à 19200 bits par seconde, voire davantage.

Les programmes de traitement contenus dans la mémoire morte $MM_1$ sont transférés dans la mémoire vive $MV_1$ lors de la mise sous tension du convertisseur CMP.

Les grandes lignes du fonctionnement du convertisseur sont les suivantes. On suppose que l'un des terminaux, par exemple $T_2$, utilisant une liaison du type V24, connecté au convertisseur CMP veut dialoguer avec un correspondant quelconque du réseau RE, que nous désignerons par CO appartenant par exemple au réseau NNW. Le terminal $T_2$ informe le processeur MP de l'unité UCG qu'il désire dialoguer avec CO, et ce à travers les éléments $LDR_1$, $UART_1$, le bus interne $BI_2$ de l'unité de conversion $CONV_1$, l'interface $INT_1$ et le bus interne $BI_1$ de l'unité UCG. Le travail du convertisseur CMP comprend alors les étapes suivantes :

1: Cette étape pilotée par le programme d'appel qui vient d'être transféré dans la mémoire vive MVP depuis la mémoire morte MMP, permet au processeur MP d'inscrire dans sa mémoire vive MVP un certain nombre d'informations nécessaires pour établir la connexion, définie par les normes ECMA 105 et 106 : ces informations sont par exemple des informations permettant de définir l'identité du terminal appelant, à savoir $T_2$, les informations permettant d'identifier le correspondant CO, la voie physique de DAM et DAD choisie par le microprocesseur MP pour établir cette phase d'appel, par exemple, $V_k$. Le microprocesseur MP indique également le protocole qui va être utilisé sur le canal D de la liaison AP pour établir cette connexion. Ici, le protocole utilisé le plus fréquemment est le protocole HDLC. Une fois que toutes ces informations ont été inscrites dans la mémoire vive MVP, on passe à l'étape suivante.

2 : Le processeur $MPS_1$, sur une commande du processeur maître MP va chercher les informations inscrites dans MVP lors de l'étape 1 et les envoie à travers la mémoire double accès DAM, le dispositif d'allocation dynamique DAD et l'interface $INT_2$ vers le correspondant CO par le canal D auquel a été affectée la voie physique $V_k$ précitée. Une fois cette information envoyée par l'unité de conversion $CONV_1$ vers le correspondant CO à travers la liaison AP, on passe à l'étape suivante :

3 : Le correspondant CO répond, fait savoir s'il est disposé ou non à accepter le dialogue avec le terminal $T_2$ et envoie les informations de réponse, suivant le même protocole HDLC, à travers la liaison AP. Les informations passent alors à travers l'interface $INT_2$, le dispositif d'allocation dynamique DAD, la mémoire double accès DAM, à travers la voie physique $V_k$ (ici en réception à travers la sous-voie $VR_k$) sont stockées dans la mémoire vive $MV_1$, analysées par le processeur $MPS_1$ qui reconnaît qu'il s'agit d'informations de signalisation transmises sur le canal D en protocole HDLC, extrait les informations de la mémoire vive $MV_1$, sans les modifier et les transmet à travers le bus $BI_2$ de l'interface $INT_1$ à la mémoire vive MVP où elles sont stockées en attendant d'être lues et traitées par le microprocesseur MP. Celui-ci, s'il est d'accord avec le contenu des informations qui lui sont transmises par le correspondant CO pour établir le dialogue avec ce dernier passe alors à l'étape suivante :

4 : Le processeur MP connecte une voie physique de l'unité de conversion $CONV_1$, par exemple la même voie qui avait été utilisée pour transmettre le canal D lors de la phase de connexion, à savoir $V_k$, mais il pourrait aussi choisir une autre voie physique que cette dernière. En même temps, le processeur MP programme la correspondance entre cette voie physique et la voie temporelle de la liaison AP choisie pour transmettre les informations qui seront émises par le terminal $T_2$. Cette correspondance est transmise au dispositif DAD par la liaison $L_1$. Ainsi, par exemple, on peut faire correspondre à la voie physique $V_k$ la voie temporelle $VT_l$. Par ailleurs, le processeur MP indique le protocole utilisé pour transmettre les informations sur la voie temporelle $VT_l$. Cette indication est stockée par le processeur de signal $MPS_1$ dans sa mémoire vive $MV_1$. Le protocole choisi peut donc être de préférence le protocole ECMA 102. Le processeur MP transmet alors au terminal $T_2$, une information autorisant ce dernier à émettre. Cette information est transmise par l'intermédiaire de $INT_1$, $BI_2$, $UART_1$, $LDR_1$. On peut alors passer à l'étape suivante.

5 : Le terminal $T_2$ émet alors ses trames d'informations en V24. Celles-ci sont transmises par l'intermédiaire de $LDR_1$ et du coupleur asynchrone $UART_1$ à la mémoire vive $MV_1$. Le processeur de signal $MPS_1$ extrait ces données de la mémoire vive, les lit, en extrait les signaux de signalisation, qu'il sépare des données proprement dites. Il effectue le transcodage de ces données si celui-ci est nécessaire (le code suivant lequel sont écrites ces données par le terminal $T_2$ sur la liaison V24 peut être ou non différent du code d'écriture utilisé de préférence sur les canaux de données de la liaison AP).

Si, au lieu du terminal $T_2$ émettant en V24, il s'agit du terminal X21, le processeur de signal, opère en mode transparent, c'est-à-dire qu'il n'effectue aucune manipulation sur les données, mais se contente de les véhiculer sans modification vers la mémoire DAM.

Une fois les données extraites et transcodées (V24), le processeur $MPS_1$ constitue alors au moins une trame (le nombre de trames constituées est évidemment fonction de la longueur du message envoyé par le terminal $T_2$) de type ECMA 102 (qui comporte 80 bits, et est donc constitué d'une succession de 10 octets) en constituant 10 octets successifs et en insérant les bits de signalisation propres au protocole ECMA 102. Une fois la succession de trames ECMA constituée, celles-ci sont transmises octet par octet par l'intermédiaire du bus $BI_2$ de la mémoire double accès DAM et du dispositif d'allocation dynamique DAD et de l'interface $INT_2$ à la liaison AP. Chaque octet est donc d'abord stocké dans la sous-voie $VE_k$ avant d'être transmis au dispositif d'allocation dynamique, cette transmission s'effectuant en parallèle. L'octet est ensuite transmis en série par le dispositif d'allocation dynamique DAD à l'interface $INT_2$, par la liaison série DE (voir figure 7). Il est clair que chaque octet constituant une trame ECMA déterminée est transmis de la même façon depuis la mémoire $MV_1$ jusqu'à l'interface $INT_2$. Une fois que toutes les informations transmises par le terminal $T_2$ ont été mises sous forme d'une succession de trames ECMA 102 et que celles-ci ont été transmises octet par octet, par l'intermédiaire de la voie physique $V_k$ véhiculant le canal de données $C_i$ correspondant à la voie temporelle $VT_i$, on passe à l'étape suivante 6 :

6 : Le correspondant CO ayant reçu la totalité des trames, répond sur le même canal de données, à savoir $C_i$ (voie temporelle $VT_i$) et dans le même protocole, au terminal $T_2$. Les informations émises par ce correspondant CO vont donc effectuer un chemin exactement inverse de celui accompli par les trames émises par $T_2$ à travers les différents éléments du convertisseur CMP. Les données vont donc être transmises en série sur la paire de fils PR à l'interface $INT_2$ qui les transmet sous forme de données série DR au dispositif d'allocation dynamique DAD lequel les transmet en parallèle à la mémoire double accès DAM, la voie temporelle $VT_i$ étant toujours affectée à la même voie physique, en l'occurrence ici, la sous-voie $VR_k$. De la mémoire double accès DAM, les informations transmises octet par octet transitent par la mémoire vive $MV_1$ avant d'être traitées par le processeur $MPS_1$.

Celui-ci vérifie d'abord le verrouillage de chacune des trames, extrait ensuite les bits de signalisation conformes au protocole ECMA 102, regroupe les données proprement dites, les transcode s'il y a lieu et les transmet ensuite suivant le protocole V24 au coupleur asynchrone $UART_1$ qui les met en lignes et les envoie vers le terminal $T_2$ à travers l'adaptateur de lignes $LDR_1$.

7 : Le processeur $MPS_1$ rend compte au processeur maître MP des opérations qu'il a effectuées aussi bien à l'émission qu'à la réception, et notamment de la façon dont l'ensemble des lignes a été connecté. Il rend également compte de l'état de chacune des lignes V24 aussi bien que des voies physiques $V_0$ à $V_{31}$. En particulier, si le processeur $MPS_1$ détecte trois verrouillages de trames successifs défectueux (en réception), il ordonne une resynchronisation avec la première trame correcte suivante (resynchronisation effectuée par $INT_2$ pour SYNR, SYNE étant rendu synchrone de SYNR par DAD, voir plus haut). Les données des trames défectueuses ne sont pas prises en compte et éliminées. $MPS_1$, rend alors compte de ce qui précède au processeur maître, qui en informe alors le correspondant CO par le canal D de la liaison AP. CO retransmet alors les informations correspondant aux trois trames défectueuses. Lorsque le dialogue entre $T_2$ et le correspondant CO est terminé, le processeur $MPS_1$ en informe le processeur maître MP qu'il peut alors procéder aux opérations de déconnexion du terminal $T_2$ et du terminal CO. On procède alors de nouveau, mais ceci pour la déconnexion, aux étapes 1 à 4. $MPS_1$ est informé dès que le terminal $T_2$ est déconnecté. Il signale alors, par le canal $C_i$ affecté à ce terminal, au correspondant du réseau RE, qui correspondait avec ce terminal qu'il n'y a plus de données disponibles pour lui, en ne lui envoyant par exemple que des bits égaux à un (ce qui signifie ligne V24 en état inactif). Il signale au processeur maître MP que le terminal $T_2$ est déconnecté.

Il est évident que ce qui vient d'être décrit pour les étapes 1 à 8, pour un échange d'informations entre le terminal $T_2$ et un correspondant CO, est également valable pour des échanges d'informations entre n'importe quel correspondant CO du réseau RE et n'importe lequel des terminaux $T_1$ à $T_n$, $HOST_1$, $HOST_2$, PC. Les dialogues entre n'importe lequel de ces terminaux à liaison V24 et des correspondants du réseau RE peuvent avoir lieu quasiment simultanément, en occupant n'importe laquelle des 32 voies physiques $V_0$ à $V_{31}$ de la mémoire double accès DAM,

le dispositif d'allocation dynamique se chargeant alors de multiplexer temporellement les données sur les 32 voies temporelles $VT_0$ à $VT_{31}$.

Lorsque l'on veut faire cesser le dialogue entre $T_2$ et CO, le processeur maître MP négocie la phase de déconnexion avec le correspondant CO, suivant un ensemble d'étapes 1', 2', 3' analogue aux étapes 1, 2, 3. A la fin de l'étape 3', $T_2$ et CO sont déconnectés.

Il convient de préciser que l'affectation par le dispositif d'allocation dynamique DAD, sous le contrôle du processeur MP, d'une voie physique $V_k$, $V_l$, $V_m$, etc, ..., quelconque à une voie temporelle $VT_i$, $VT_j$, etc, ..., ne s'effectue pas, dans la pratique, à l'arrivée de chaque octet $IT_i$ d'une même trame d'informations $MTR_i$ ni même lorsque le dernier octet de celle-ci arrive sur le dispositif d'allocation dynamique DAD. Dans la pratique, la réaffectation d'une nouvelle voie physique différente de $V_k$ à la voie temporelle $VT_i$, n'a lieu que lorsque des centaines voire des milliers de trames de type $MTR_i$ ont transité sur la même voie temporelle $VT_i$. La réaffectation des voies et par conséquent la reprogrammation correspondante du dispositif d'allocation dynamique n'a lieu que lorqu'il y a nécessité de changer de mode de communication.

En d'autres termes, on peut dire que le dispositif d'allocation dynamique DAD effectue, sous le contrôle de l'unité de contrôle et de gestion UCG, l'affectation dynamique des différentes voies temporelles de communication sur les voies parallèles physiques de la mémoire double accès DAMI. On peut même dire dans un certain sens que ce dispositif d'allocation dynamique réalise l'affectation dynamique des différents terminaux de type V24 sur les voies parallèles physiques de la mémoire double accès DAM. Cette affectation dynamique des voies temporelles sur les 32 voies physiques s'effectue en fonction des configurations, c'est-à-dire des besoins et des charges de la conversation entre les différents terminaux de type V24 accordés au convertisseur selon l'invention et les différents correspondants du réseau RE, ces besoins et ces charges étant connus de l'unité de contrôle et de gestion UCG.

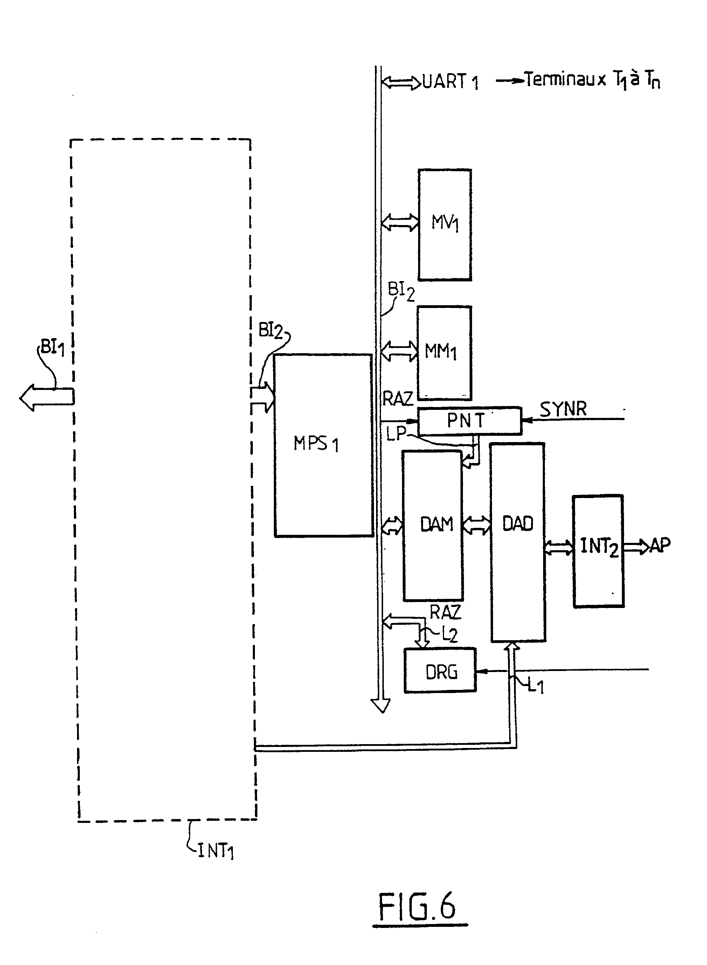

On considère désormais les figures 6, 7, 8, 9 qui montrent de façon plus détaillée comment est constitué et comment fonctionne l'unité de conversion $CONV_1$.

Cette unité comprend outre les éléments déjà cités précédemment, le pointeur PNT et le dispositif de régulation de transfert de données DRG.

Le pointeur PNT reçoit les signaux de synchronisation SYNR provenant de l'interface $INT_2$ d'une part, et d'autre part, un signal de remise à zéro initial RAZ envoyé via le bus $BI_2$ par le processeur de signal $MPS_1$, lorsque débute le travail du convertisseur CMP.

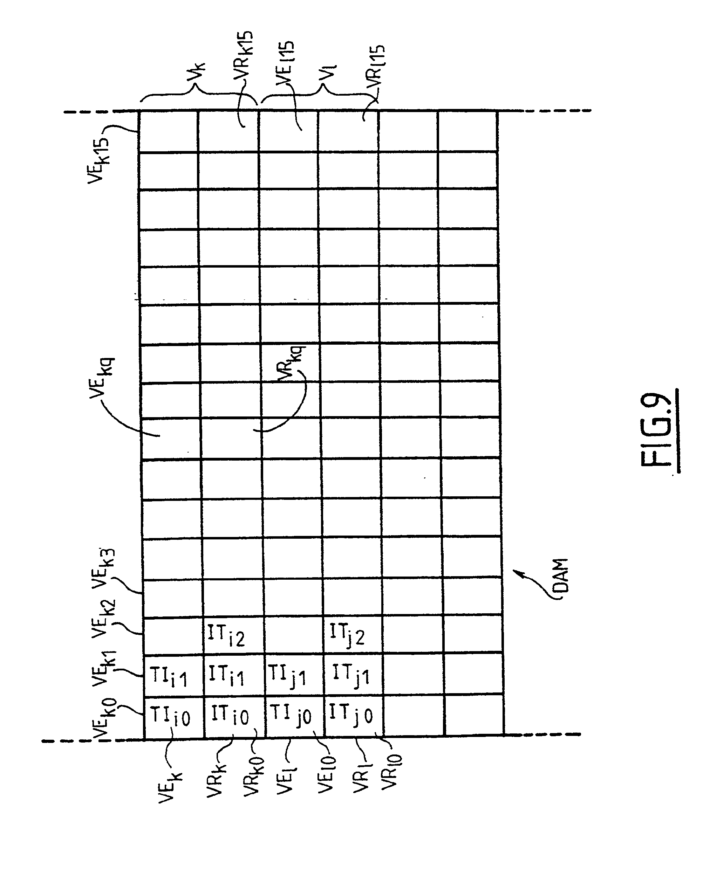

Ainsi qu'on peut le voir à la figure 7, ce pointeur, qui est un compteur modulo 16 dont le contenu est incrémenté d'une unité lorsqu'il reçoit une impulsion de synchronisation (SYNR) correspondant à l'arrivée (en réception) d'une trame temporelle TRL est relié également par l'intermédiaire d'une liaison parallèle LP sur 4 bits à la mémoire double accès DAM. On sait que chaque voie $V_k$ (sous-voie $VE_k$ et sous-voie $VR_k$) peut contenir 16 octets d'information correspondant à 16 trames temporelles successives. En fait, en pratique, (pour des centaines, voire des milliers de trames temporelles de type TRL successives véhiculées par une même voie temporelle $VT_i$, par exemple), les 16 octets contenus dans cette même voie $V_k$ sont des octets $IT_i$ appartenant à 16 trames temporelles successives $TRL_0$ à $TRL_{15}$. Chaque voie $V_k$ (et donc les deux sous-voies qui la composent) comprend donc 16 zones comprenant chacune un octet $IT_i$ appartenant à 1 parmi 16 trames temporelles successives, ces 16 zones ayant un rang compris entre 0 et 15 et étant dénommées $VE_{kq}$ et $VR_{kq}$. (Voir figure 9).

Le pointeur PNT indique donc le rang q d'une trame temporelle $TRL_q$ parmi 16 trames successives (entre 0 et 15) et de ce fait, le rang de la zone $VE_{kq}$ (ou $VR_{kq}$) où est rangé momentanément l'octet $IT_i$ de la dite trame $TRL_q$ dans la voie $V_k$.

Le dispositif de régulation DRG est en fait constitué par un compteur-décompteur sur 4 bits, qui permet de connaître l'état de remplissage de la mémoire double accès DAM. Il reçoit le signal de synchronisation (SYNR ou SYNE). Il est incrémenté d'une unité chaque qu'il reçoit une impulsion de synchronisation, (et par conséquent, chaque fois qu'une trame $TRL_q$ arrive sur le dispositif DAD) et est décrémenté de deux unités chaque fois que le processeur de signal a terminé le traitement relatif à deux trames $TRL_{q-1}$ et $TRL_q$ successives. En effet, le processeur de signal $MPS_1$ effectue des traitements sur 16 bits, soit 2 octets successifs. Il peut lire le contenu du compteur DRG sur ses 4 bits de données de poids faible de son bus de données (il n'utilise que ceux-ci pour lire le contenu de DRG). Par ailleurs, au début des opérations, le processeur de signal $MPS_1$ remet à zéro DRG. Dès qu'il se déclare prêt à travailler, il autorise son fonctionnement en envoyant un signal d'écriture sur une entrée spéciale de celui-ci (non représentée pour simplifier aux figures 6 et 7) par l'intermédiaire de la liaison $L_2$.

Le processeur $MPS_1$ compte également, au moyen d'un pointeur interne de type logiciel, les trames de type temporel $TRL_q$ qui lui parviennent et effectue la comparaison entre le contenu de son compteur interne et le contenu du dispositif de régulation DRG.

De plus, il peut générer trois types d'interruption de fonctionnement du convertisseur CMP suivant certaines valeurs particulières du contenu du dispositif DRG, qui sont, dans l'exemple de réalisation décrit ici 15, 12 et 5 (ou 4).

Si le contenu du dispositif de régulation est égal à 15, alors le processeur $MPS_1$ génère une interrup-

tion vers le processeur maître MP, via l'interface $INT_1$. Tout est alors remis à zéro, et l'ensemble des opérations qui étaient en cours et n'ont pas pu être traitées par le processeur $MPS_1$ devra être repris (aussi bien à l'émission qu'à la réception).

Si le processeur $MPS_1$ ne lit pas assez vite les octets contenus dans la mémoire double accès DAM, le contenu du dispositif DRG va devenir égal à 12. (mémoire DAM remplie au 3/4). Ce dernier envoie un premier signal d'interruption (via $L_2$) vers $MPS_1$. Celui-ci, pour résorber son retard (qui est dû au fait qu'il ne lit et/ou n'écrit pas aussi vite que les octets parviennent au dispositif d'allocation dynamique DAD et dans la mémoire DAM) décide par exemple, de ne traiter que les signaux en réception. En règle générale, son retard se résorbe et le contenu de DRG redescend à 4 ou 5 (mémoire DAM vide au 3/4). Il génère une seconde interruption via $L_2$ vers $MPS_1$, lequel reprend son travail normal en émission et réception. En général, lorsque la pointe de trafic est passée, le contenu du compteur DRG n'excède jamais 12 et reste compris entre 1 et 3 (trafic normal).

Si, après la première interruption (contenu égal à 12) le contenu du compteur évolue de manière à atteindre 15, on est ramené au cas décrit ci-dessus, à savoir l'interruption du processeur MP et remise à zéro complet de l'ensemble CMP. Il convient de noter qu'une interruption qui survient lorsque DAM est vide au 3/4 (contenu égal à 4) ne peut survenir que lorsque l'interruption correspondant à une mémoire remplie au 3/4 est intervenue, et vice-versa.

Le dispositif d'allocation dynamique DAD reçoit (ou envoie à) provenant de l'interface $INT_2$, les signaux de données DRG (signaux DE), le signal de synchronisation SYNR (SYNE) et l'horloge CLK. Il contient une table TAB établissant la correspondance entre la voie temporelle $VT_i$ et la voie physique $V_k$ de la mémoire double accès DAM. Ainsi qu'on l'a vu plus haut cette correspondance est établie par programmation du dispositif d'allocation dynamique par le processeur maître MP.

Par ailleurs, le dispositif DAD est connecté par l'intermédiaire d'un bus de données sur 8 bits en parallèle, à savoir BD, d'un bus d'adresse sur 5 bits à savoir BA et d'une liaison LRW monofilaire à la mémoire double accès DAM. Le bus d'adresse BD transmet l'octet de données correspondant à la voie temporelle $VT_i$, le bus d'adresse BA transmet sur 5 bits l'adresse de la voie physique $V_k$ de la mémoire double accès DAM, alors que la liaison LRW indique qu'il s'agit de données d'émission ou de données de réception (DR ou DE). Le dispositif DAD écrit des octets dans DAM en réception (dans la sous-voie $VR_k$) et vient lire ceux-ci à l'émission (dans la sous-voie $VE_k$).

Le fonctionnement plus détaillé de l'ensemble DAD, DMT, DR, DAM, $MPS_1$ est le suivant :

On suppose que $MPS_1$ a initialisé à zéro (signal RAZ) le pointeur PNT et le dispositif de régulation DRG et qu'il a ensuite autorisé leur fonctionnement. On considère alors une succession de 16 trames temporelles (le raisonnement serait bien entendu identique pour toutes les trames temporelles qui suivront ces 16 premières), à savoir $TRL_0$, ..., $TRL_q$, ..., $TRL_{16}$. On considère, de plus, un premier octet de données $IT_i$ correspondant à la voie temporelle $VT_i$ appartenant à la trame d'informations $MTR_i$ et un second octet $IT_j$ correspondant à $VT_j$ et appartenant à $MTR_j$. Le raisonnement serait évidemment le même pour d'autres octets correspondant à d'autres voies temporelles. Les octets $IT_i$, $IT_j$ correspondant aux trames temporelles $TRL_0$ à $TRL_{15}$ sont respectivement $IT_{i0}$ à $IT_{i15}$ et $IT_{j0}$ à $IT_{j15}$.

Soient alors la première trame $TRL_0$ et les octets correspondants $IT_{i0}$ et $IT_{j0}$.

Le signal de synchronisation SYNR arrive sur PNT, DAD et DR.

Le contenu de PRT passe de 0 à 1. Celui de DRG passe de 0 à 1. L'octet $IT_{i0}$ est transmis en série (après avoir été remis en forme par l'interface $INT_2$ au dispositif DAD). La table TAB contient alors le numéro k de la voie physique $V_k$ dont la sous-voie $VR_k$ va contenir l'octet $IT_{i0}$ qui ira dans la zone $VR_{k0}$. Cette table établit donc la correspondance entre i et k. Le bus d'adresse BA transmet alors la valeur k à la mémoire DAM quand il reçoit l'octet $IT_{i0}$.

Ce dernier est stocké à l'intérieur des registres (non représenté pour simplifier aux figures 6 et 7) de type série-parallèle de DAD, le temps nécessaire à le transformer d'octet série en octet parallèle. Il est alors écrit par DAD dans la zone $VR_{k0}$ de la mémoire double accès DAM. Pendant ce temps la ligne LP transmet alors sur 4 bits la valeur 0 qui est le numéro de la zone $VR_{k0}$ contenant l'octet $IT_{i0}$ (cette valeur 0 correspond au numéro 0 de la trame $TRL_0$). Un raisonnement analogue peut être fait pour l'octet $IT_{j0}$ écrit par le dispositif d'allocation dynamique DAD dans la zone $VR_{l0}$ de la sous-voie $VR_l$ appartenant à la voie $V_l$ qui est affectée à la voie temporelle $VT_j$ par le processeur MP.

Dès que les octets $IT_{i0}$ et $IT_{j0}$ sont écrits, et avant que la nouvelle impulsion de synchronisation correspondant à la trame temporelle $TRL_1$ n'arrive, DAD vient lire ce qui est contenu dans les zones $VE_{k0}$ et $VE_{l0}$ des sous-voies $VE_k$ et $VE_l$ où le processeur $MPS_1$ est censé avoir écrit des octets appartenant à des trames d'émission envoyées par l'un quelconque des terminaux connectés au convertisseur CMP. En fait, aussitôt après la réinitialisation, ce dernier n'écrit rien dans la mémoire double accès tant que le contenu de DR n'est pas égal à 3. De ce fait, DAD lit des zones $VE_{k0}$ et $VE_{l0}$ dont le contenu est considéré comme vide.

Lorsque la trame temporelle $TRL_1$ arrive, le contenu de PNT et DRG passe à 2. DAD écrit les octets $IT_{i1}$ et $IT_{j1}$ dans les zones $VR_{k1}$ et $VR_{l1}$, DAD lisant ce qui est censé être écrit dans les zones $VE_{k1}$

et $VE_{I1}$, et lit donc un contenu vide.

Lorsque $TRL_2$ arrive, le contenu de PNT et DRG passe à 3.

Pendant le même temps, DAD écrit les octets $IT_{I2}$ et $IT_{j2}$ en $VR_{k2}$ et $VR_{I2}$ et lit ce qui est censé être écrit dans les zones $VE_{k2}$ et $VE_{I2}$ et par suite un contenu vide. Pendant ce temps, $MPS_1$ lit DRG, il constate que son contenu est égal à 3 et sait par conséquent que deux octets, $IT_{I0}$, $IT_{I1}$, $IT_{j0}$, $IT_{j1}$, etc, ... sont arrivés et vient lire ceux-ci. Il en fait le traitement suivant le protocole de transmission utilisé pour $MTR_i$ et $MTR_j$ et les stocke dans la mémoire vive avant de les transmettre aux terminaux à qui ils sont destinés, via les coupleurs asynchrones UART. $MPS_1$ écrit ensuite 2 octets d'information $TI_{I0}$ et $TI_{j0}$ appartenant à 2 trames d'information émises par exemple par deux terminaux connectés au convertisseur CMP, ces trames étant dénommées $TMR_i$ et $TMR_j$, dans les zones $VE_{k0}$ et $VE_{I0}$ de DAM et les 2 octets suivants $TI_{I1}$ et $TI_{j1}$ appartenant aux mêmes trames dans les zones $VE_{k1}$ et $VE_{I1}$.

Dès que ceci est terminé, le processeur $MPS_1$ décrémente de 2 le contenu de DRG (qui passe alors à 1) et garde en mémoire (par son pointeur interne qu'il a lu) ce qui était contenu en $VR_{k0}$-$VR_{k1}$, $VR_{I0}$-$VR_{I1}$.

Arrive ensuite la trame $TRL_3$. Le contenu de PNT passe à 4. Le contenu de DRG passe à 2. DAD écrit $IT_{I3}$ et $IT_{j3}$, en $VR_{k3}$ et $VR_{I3}$, lit le contenu vide de $VE_{I3}$ et $VE_{k3}$. $MPS_1$ ne fait rien. Lorsque $TRL_4$ arrive, PNT passe à 5 et DRG passe à 3. On retrouve alors un raisonnement analogue à ce qui se passait à l'arrivée de $TRL_2$. DAD écrit $IT_{I4}$ et $IT_{j4}$ en $VR_{k4}$ et $VR_{I4}$. $MPS_1$ vient lire les octets contenus en $VR_{k2}$-$VR_{k3}$, $VR_{I2}$-$VR_{I3}$. Les phénomènes se reproduisent alors identiques à eux-mêmes jusqu'à l'arrivée de $TRL_{16}$ ou le pointeur PNT voit son contenu passer à 0 et DR voit le sien passer à 2 ou 3 (suivant que $MPS_1$ a eu un rythme normal ou a été retardé).

$IT_{I16}$-$IT_{j16}$ seront écrits en $VR_{k0}$-$VR_{I0}$ et ainsi de suite, le processus se reproduit identique à lui-même.

## Revendications

1. Convertisseur (CMP) multiprotocoles de raccordement d'une pluralité de terminaux asynchrones ($T_1$ à $T_n$) à un réseau de télécommunications (RE) par l'intermédiaire d'une liaison numérique multiplexée temporellement (AP) comprenant une pluralité n de canaux de données ($C_0$ à $C_{31}$, $VT_0$ à $VT_{31}$) gérés selon une pluralité de protocoles et supportés par une ligne de transmission (PE, PR), comprenant :
   - une unité de commande et de gestion (UCG) gérant les phases d'appel entre chaque terminal ($T_1$ à $T_n$) raccordé au convertisseur (CMP) et le réseau (RE),
   - au moins une unité de conversion ($CONV_1$)

reliée d'une part à l'unité de commande (UCG) et d'autre part à la ligne de transmission, assurant le multiplexage et le démultiplexage temporel des différents canaux de données de la liaison (AP),
   caractérisé en ce que l'unité de conversion ($CONV_1$) comprenant des coupleurs asynchrones ($UART_1$) la reliant aux terminaux et envoyant au moyen d'une liaison série des trames de données vers ceux-ci ou recevant les trames qu'ils émettent et les transmettant à l'unité de conversion ($CONV_1$), l'unité de commande (UCG) définit le canal de données de la liaison ($C_I$, $VT_I$) affecté aux trames de données émises par ou destinées à un terminal donné et le protocole correspondant et l'unité de conversion ($CONV_1$) effectue la conversion des protocoles et des débits de données allant vers ou provenant de chaque terminal donné en protocole et débits de données du canal de données affecté à ce terminal.

2. Convertisseur selon la revendication 1 caractérisé en ce que l'unité de commande et de gestion (UCG) comprend :
   - un microprocesseur (MP) qui est le processeur maître du convertisseur,
   - une mémoire morte,
   - une mémoire vive,
   le processeur maître, la mémoire vive et la mémoire morte étant reliés à un même processeur interne ($BI_1$).

3. Convertisseur selon la revendication 2 caractérisé en ce que la mémoire morte contient un micrologiciel de traitement de signalisation, c'est-à-dire des phases d'appel de connexion de chaque terminal asynchrone au réseau de télécommunications, ce programme étant chargé dans la mémoire vive (MVP) lors de la mise sous tension du convertisseur, et étant traité par le processeur maître, la mémoire morte comportant par ailleurs un programme micrologiciel d'affectation à un canal de données déterminé des trames de données émises par ou destinées à l'un des terminaux asynchrones raccordé au convertisseur (CMP) et du protocole correspondant, ce programme étant également chargé dans la mémoire vive (MVP) à la mise sous tension du convertisseur et traité par le processeur maître.

4. Convertisseur selon l'une quelconque des revendications 1, 2, 3, caractérisé en ce que l'unité de conversion ($CONV_1$), comprend :
   - un processeur de signal ($MPS_1$) associé à une mémoire morte programmable ($MM_1$) et à une mémoire vive ($MV_1$),
   - une mémoire double accès de type fifo (DAM) comprenant n voies physiques ($V_0$ à

$V_{31}$) distinctes aussi bien à l'émission qu'en réception, les éléments (MPS$_1$, MM$_1$, MV$_1$, DAM) ainsi que les coupleurs asynchrones (DUART$_1$) étant reliés à un même bus interne (BI$_2$), l'unité de conversion comprenant en outre disposés en série entre la mémoire double accès et la ligne de transmission (PE, PR) :

– un dispositif (DAD) d'allocation dynamique des voies temporelles (VT$_i$, VT$_j$, ....,) de données de la liaison,

– une interface (INT$_2$) effectuant l'adaptation des niveaux électriques entre la ligne de transmission et les différents éléments de l'unité de conversion ainsi que l'extraction d'un signal d'horloge (CLK) et de signaux de synchronisation (SYNE, SYNR).

5. Convertisseur selon la revendication 4 caractérisé en ce que la mémoire morte programmable (MM$_1$) contient un programme micrologiciel de conversion des protocoles et des débits de données allant vers ou provenant de chaque terminal donné en protocole et débit de données du canal de données affectés à ce terminal par l'unité de commande et de gestion (UCG), ce programme étant chargé dans la mémoire vive (MV$_1$) à la mise sous tension du convertisseur, le processeur de signal effectuant le traitement de ce programme.

6. Convertisseur selon la revendication 5 caractérisé en ce que le dispositif d'allocation dynamique reçoit ou émet les données (TR, TE) et un signal de synchronisation (SYNR, SYNE) envoyé soit par l'interface (INT$_2$) soit par le processeur de signal (MPS$_1$) sur un bus série de données véhiculant les n voies temporelles, transformant à la réception les ensembles de bits série en ensembles de bits parallèles envoyés dans la mémoire double accès (et réciproquement à l'émission), assurant l'allocation dynamique des n voies temporelles sur les n voies physiques de la mémoire double accès, sous la commande du processeur maître (MP), le processeur de signal (MPS$_1$) venant lire (ou écrire) dans chaque voie ($V_k$) de la mémoire double accès, lors de l'arrivé de chaque bit du signal de synchronisation (SYNR, SYNE) les données qui sont inscrites (ou lues) par le dispositif d'allocation (DAD), les stocke en mémoire, analyse l'état des trames selon le type de protocole utilisé pour la transmission de celles-ci tant à l'émission qu'à la réception, en extrait les données, les constitue en trames selon un nouveau protocole et envoie ensuite celles-ci soit aux terminaux asynchrones soit vers le réseau (RE) suivant qu'il s'agisse de réception ou d'émission.

7. Convertisseur selon la revendication 6, caractérisé en ce que le dispositif d'allocation dynamique (DAD) comprend une table (TAB) où sont inscrites les correspondances entre chaque voie temporelle (VT$_i$, VT$_j$) et chaque voie physique ($V_k$, V$_l$) de la mémoire double accès (DAM), le dispositif d'allocation (DAD) envoyant à (ou recevant de) cette dernière, d'une part chaque ensemble de bits parallèles, d'autre part le numéro de la voie physique où doit être écrit (ou lu) cet ensemble, et enfin un bit indiquant si cet ensemble doit être écrit (ou lu) dans cette voie physique.

8. Convertisseur selon l'une des revendications 5, 6, 7, caractérisé en ce que chaque voie physique ($V_k$, V$_l$) de la mémoire double accès (DAM) peut contenir 16 ensembles de bits parallèles.

9. Convertisseur selon l'une des revendications 5, 6, 7, 8, caractérisé en ce qu'il comporte un pointeur (PNT) remis à zéro par un signal (RAZ) envoyé par le processeur de signal (MPS$_1$), et recevant ledit signal de synchronisation (SYNR), comptant le nombre de trames temporelles reçues (ou émises) et envoyant à la mémoire double accès (DAM) le rang q de l'ensemble de bits parallèles qui est inscrit (ou lu) par le dispositif d'allocation dynamique (DAD) dans la voie physique ($V_k$, V$_l$).

$$LS_2 = C_0 \text{ à } C_{31} = VT_0 \text{ à } VT_{31}$$

TRL

$IT_0$   $IT_1$   $IT_2$        $IT_i \rightarrow MTR_i$   $IT_{16}$        $IT_j \rightarrow MTR_j$   $IT_{31}$        $IT_1$

125 µs

bits   $b_0$ , $b_1$ , $b_2$ , $b_3$ , $b_4$ , $b_5$ , $b_6$ , $b_7$

$IT_i$

## FIG.1

R

$V_{24}$  $V_{24}$  $X_{21}$

AP

CONV        UCG

CMP

## FIG.4

FIG.2

FIG.3

## FIG.5

FIG.6

FIG.7

FIG.8

VE_k0  VE_k1  VE_k2  VE_k3  VE_kq  VE_k15

VE_k  VR_k  VR_k0  VE_l  VE_l0  VR_l  VR_l0

IT_i0  IT_i1  IT_i2  IT_j0  IT_j1  IT_j2

V_k  VR_k15  VE_l15  V_l  VR_l15  VR_kq

DAM

FIG.9

Office européen
des brevets

# RAPPORT DE RECHERCHE EUROPEENNE

Numero de la demande

EP    91 40 1060

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int. Cl.5) |
|---|---|---|---|
| X | COMPUTER DESIGN. vol. 28, no. 19, 01 octobre 1989, LITTLETON, MASSACHUS pages 28 - 32; R.Wilson: "Communications controllers search for higher integration" * page 30, colonne du milieu, ligne 5 - page 32, colonne de droite, ligne 49 * --- | 1-9 | H04Q11/04 H04L29/06 H04M11/06 |
| A | EP-A-0100092 (CSELT) * page 5, ligne 23 - page 8, ligne 29; figure 1 * * page 10, lignes 5 - 33 * * page 13, lignes 12 - 33 * --- | 1-9 | |
| A | JAPAN TELECOMMUNICATION REVIEW. vol. 25, no. 4, octobre 1983, TOKYO JP pages 275 - 282; S.Tomita: "Improved D50 Circuit Switching System" * pages 278 - 279, colonne de gauche, ligne 28 * --- | 1, 4, 5 | |
| A | EP-A-0250075 (NORTHERN TELECOM) * page 13, lignes 7 - 35; figures 4, 19-21 * * page 30, ligne 25 - page 33, ligne 29 * --- | 1-9 | DOMAINES TECHNIQUES RECHERCHES (Int. Cl.5) H04Q H04L |
| A | US-A-4821265 (ALBAL ET AL.) * le document en entier * --- | 1-5 | |
| A | ELECTRO vol. 8, no. 13/1, 1983, LOS ANGELES US pages 1 - 7; S.Wilder: "An Applications Oriented Approach to Office Automation" * figure 5.1 * --- | 1 | |
| P,X, L | EP-A-0377350 (BULL) * le document en entier *(doute de priorité) ----- | 1-9 | |

Le présent rapport a été établi pour toutes les revendications

| Lieu de la recherche | Date d'achèvement de la recherche | Examinateur |
|---|---|---|
| LA HAYE | 08 JUILLET 1991 | KURVERS F.J.J. |